## Europäisches Patentamt

## European Patent Office

## Office européen des brevets

(19)

(11) Veröffentlichungsnummer: **0 053 336**
**B1**

(12) **EUROPÄISCHE PATENTSCHRIFT**

(45) Veröffentlichungstag der Patentschrift:
**18.04.84**

(51) Int. Cl.³: **G 03 B 23/04**

(21) Anmeldenummer: **81109811.0**

(22) Anmeldetag: **21.11.81**

(54) **Diaprojektor mit einem Diawechselschieber und einem hierauf verschiebbaren Reiter.**

(30) Priorität: **27.11.80 DE 3044638**

(43) Veröffentlichungstag der Anmeldung:
**09.06.82 Patentblatt 82/23**

(45) Bekanntmachung des Hinweises auf die Patenterteilung:
**18.04.84 Patentblatt 84/16**

(84) Benannte Vertragsstaaten:
**AT FR GB IT**

(56) Entgegenhaltungen:
**EP - A - 0 011 229**
**EP - A - 0 011 740**
**EP - A - 0 039 416**
**DE - B - 3 011 890**

(73) Patentinhaber: **AGFA-GEVAERT Aktiengesellschaft,
D-5090 Leverkusen 1 (DE)**

(72) Erfinder: **Sylla, Jürgen, Amselweg 1b,
D-8029 Sauerlach-Arget (DE)**
Erfinder: **Müller, Hermann, Vogesenstrasse 25a,
D-8000 München 82 (DE)**

ACTORUM AG

Diaprojektor mit einem Diawechselschieber und einem hierauf verschiebbaren Reiter

Die Erfindung betrifft einen Diaprojektor für gerahmte Diapositive, die in Magazinen unterschiedlichen Typen angeordnet sind, wobei sich die verschiedenen Magazintypen durch eine unterschiedliche Diafachbreite unterscheiden, wobei ein motorisch oder von Hand betätigbarer Diawechselschieber und eine Vorrichtung zum schrittweisen Weitertransport des jeweils eingesetzten Magazins um jeweils eine Diafachbreite nach der Zurückführung eines projizierten Dias in das Magazin vorgesehen sind, wobei die Breite des Diawechselschiebers in seinem Teilabschnitt, der beim Diatransport zwischen die in einem Magazin befindlichen Dias ein- und ausfahren und dabei jeweils das mittlere von drei Dias mitnehmen muss, kleiner ist als der Abstand zwischen einem Dia und dem übernächsten in dem Magazin mit der geringeren Diafachbreite angeordneten Dia und wobei ein in Transportrichtung des Diawechselschiebers verschiebbarer Reiter in diesen Teilabschnitt an die Stirnseite des Diawechselschiebers bewegbar ist, dessen Breite grösser als die Stirnbreite des Wechselschiebers und kleiner als der Abstand zwischen einem Dia und dem übernächsten Dia in dem Magazin mit der grösseren Diafachbreite ist, nach EP-A-0 011 740.

Der Erfindung liegt die Aufgabe zugrunde, einen Diaprojektor dieser Art so auszubilden, dass der Reiter automatisch die dem verwendeten Magazintyp entsprechende Stellung auf dem Wechselschieber einnimmt.

Diese Aufgabe wird erfindungsgemäss gelöst durch die Merkmale des Hauptanspruches. Weitere vorteilhafte Merkmale der Erfindung sind den Unteransprüchen entnehmbar.

Die Erfindung wird anhand von Zeichnungen näher erläutert. Es zeigen:

Fig. 1 einen Schnitt durch die erfindungswesentlichen Teile des erfindungsgemässen Diaprojektors parallel zur Magazinführungsbahn,

Fig. 2 einen Schnitt durch die Anordnung nach Fig. 1 gemäss der Schnittlinie II–II bei Verwendung eines Magazins mit der geringeren Diafachbreite,

Fig. 3 die Darstellung nach Fig. 2 in der Stellung ohne Diamagazin oder bei Verwendung eines Magazins mit der grösseren Diafachbreite.

Es sind bereits Diaprojektoren bekannt geworden, die eine als Magazinschachtboden 1 ausgebildete untere Magazinführungsbahn 1, die zum Einsetzen sog. Einheitsmagazine 2 mit relativ grösserer Diafachbreite geeignet ist, und eine darüberliegende, als Stufen oder Nuten 3 ausgebildete Magazinführungsbahn 3 aufweist, auf oder in die die seitlichen Längsrippen 4a eines zweiten Magazintyps 4 mit geringerer Diafachbreite einsetzbar sind.

Auf der dem nichtgezeigten Projektionsobjektiv und Lampenhaus bzw. der Diabühne abgewandten Seite des die beiden Magazinführungsbahnen 1, 3 aufweisenden Magazinschachtes 5 ist ein hohles Gehäuseteil 6 vorgesehen, das zwei Durchbrüche 6a und 6b aufweist, in denen der Transportarm 7 eines im übrigen nur abgebrochen gezeichneten, an sich bekannten, auf irgendeine übliche Weise geführten oder gesteuerten, von Hand oder motorisch betätigbaren Diawechselschiebers verschiebbar geführt ist. Der dem Schacht 5 bzw. den Führungsbahnen 1, 3 abgewandte Durchbruch 6b ist gerade so gross, dass der Transportarm 7 durch ihn durchführbar ist. Auf seiner Innenseite trägt er einen Kragen 6c, der als Anschlag für einen auf dem Transportarm 7 verschiebbaren Reiter 8 dient, so dass letzterer bei der Bewegung des Transportarmes 7 bzw. des Wechselschiebers vom Schacht 5 weg nicht aus dem Gehäuseteil 6 herausbewegt werden kann. Der Durchbruch 6a dagegen ist so gross, dass der Reiter 8 zumindest in seiner später zu beschreibenden, mit dem Transportarm 7 gekuppelten Lage durch den Durchbruch 6a zusammen mit dem Transportarm 7 bewegbar ist.

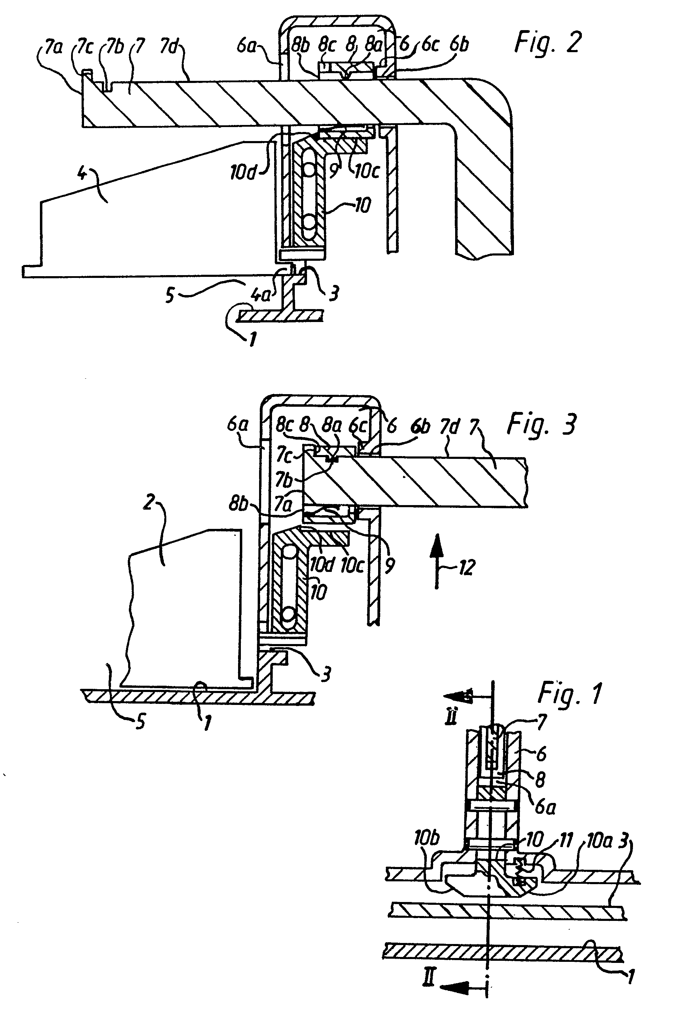

Am Reiter 8, der O-förmig den Transportarm 7 umgreift, ist eine senkrecht zur Bewegung des Wechselschiebers 7 vorstehende Kupplungsklaue 8a vorgesehen, die in die in der Nähe der Schieberstirnseite 7a gelegene Kupplungsausnehmung 7b eingreifen kann. Die Kupplungsausnehmung 7b ist so gelegen, dass die Kupplungsklaue 8a dann hineinspringt bzw. eingreift, wenn die Reiterstirnseite 8b mit der Schieberstirnseite 7a etwa fluchtet. Am Reiter 8 ist eine in Verschieberichtung an seiner magazinseitigen Stirnseite 8a verlaufende Ausnehmung 8c vorgesehen, in die ein stirnseitiger Anschlaglappen 7c zur gegenseitigen Fixierung der Stirnseiten 7a, 8b eingreift, wenn der Kupplungszahn 8a in die Kupplungsausnehmung 7b eingefallen ist. Durch Anschlaglappen 7c und Ausnehmung 8c wird erreicht, dass der Durchbruch 6b bzw. sein Kragen 6c mittelbar über den Reiter 8 auch als Bewegungsbegrenzung für den Transportarm 7 bzw. den Wechselschieber in seiner aus dem Gehäuseteil 6 herausgezogenen Stellung dient, wie dies in Fig. 3 erkennbar ist.

Der innere Hohlraum des Reiters 8 ist höher als die Höhe des Transportarmes 7, so dass durch Verschieben des Reiters 8 senkrecht zur Transportrichtung des Transportarmes 7 nach oben und parallel hierzu die Kupplungsklaue 8a ausser Eingriff mit der Kupplungsausnehmung 7b gelangen und über der Oberkante 7d des Transportarmes 7, ggf. auch auf dieser, liegen kann, vgl. Fig. 2.

Die Breite des Transportarmes 7 ist so bemessen, dass er zwischen drei Dias in einem Magazin 4 mit der geringeren Diafachbreite durchfahren und das mittlere der drei Dias in die Diabühne und zurück in ein Magazin 4 transportieren kann. Die Breite der Stirnseite 8b des Reiters 8 ist dagegen so gross, dass der Transportarm 7 mit stirnseitigem Reiter 8 zwischen drei Dias in einem Magazin 2 mit der grösseren Diafachbreite hindurchfahren kann und dabei wiederum das mittlere Dia transportiert und zugleich einen sicheren Transport auch dünner Dias in einem derartigen Magazin 2 gewährleistet. Zwischen dem Reiter 8 und dem Transportarm 7 ist, vorzugsweise am Reiter 8 befestigt eine Feder 9 angeordnet, die den Reiter in seine mit dem Transportarm 7 gekuppelte Stellung zu drücken sucht. Ist der Reiter 8 entkuppelt, so ist sie gemäss Fig. 2 gespannt; wird der Reiter 8 freigegeben und gelangt in die Stellung, in der die Kupplungsklaue 8a in die Kupplungsausnehmung 7b einfallen kann, so entspannt sie sich und kuppelt Reiter 8 und Transportarm 7 in ihrer stirnseitigen Funktionsstellung, vgl. Fig. 3.

Um nun die An- bzw. Abkupplung des Reiters 8 an den Transportarm 7 selbsttätig in Abhängigkeit vom in den Magazinschacht 5 eingesetzten Magazintyp 4 bzw. 2 zu bewirken, greift ein Abtaster 10 unter der Wirkung einer Feder 11 in der Führungsebene 3 für die Magazine 4 mit der geringeren Diafachbreite. Es weist in Magazinlängsrichtung zwei gegenläufige Schrägflächen 10a, 10b auf. Wird ein Magazin 4 bzw. seine Rippe 4a in Magazinführungsbahn bzw. Nut 3 eingeschoben, so drängt seine Stirnseite den Abtaster 10 an der ihr zugewandten Schrägfläche 10a bzw. 10b nach oben in Richtung des Pfeiles 12 unter Spannung der Feder 11. Die dem Reiter zugewandte Fläche 10c des Abtasters 10 weist einen Absatz 10d auf. Der Abtaster 10 ist so gelagert, dass seine Fläche 10c in der herausgezogenen Stellung des Transportarmes 7, vgl. Fig. 3, genau unterhalb des Reiters 8 und sein Absatz 10d magazinseitig vom Reiter 8 liegt.

Wird nun entsprechend Fig. 2 ein Magazin 4 in die Magazinführungsbahn 3 eingesetzt, so drängt seine Stirnseite an einer der Schrägfläche 10a, 10b den Abtaster 10 in Pfeilrichtung 12, so dass dessen Fläche 10c den Reiter 8 entgegen der Wirkung der Feder 9 anhebt und vom Transportarm 7 abkuppelt. Der Absatz 10d liegt dabei magazinseitig vor dem Reiter 8, so dass dieser bei Bewegung des Transportarmes 7 bzw. Wechselschiebers nicht mehr mitbewegt wird und mit seiner Kupplungsklaue 8a über der Oberkante 7d des Transportarmes 7 liegt. Der Transportarm 7 transportiert dementsprechend mit seiner schmalen Stirnseite die eng beisammenliegenden Dias im Magazin 4 mit der geringeren Diafachbreite.

Wird ein Magazin 4 aus der Führungsbahn 3 entnommen, so wird der Abtaster 10 freigegeben und unter der Wirkung der Feder 11 wieder in die Führungsbahn 3 gedrückt. Die Kupplungsklaue 8a bleibt dabei so lange auf der Oberkante 7d des Transportarmes 7 liegen, bis dieser seine herausgezogene Stellung nach Fig. 3 wieder einnimmt und die Kupplungsklaue 8a wieder in Kupplungsausnehmung 7b unter Entspannung der Feder 9 einspringt. Somit ist die in Fig. 3 gezeigte Stellung wieder erreicht, die für in die Magazinführungsbahn 1 einsetzbare Magazin 1 mit der grösseren Diafachbreite geeignet ist.

Gemäss dem vorliegenden Ausführungsbeispiel ist der Abtaster 10 als in Pfeilrichtung 12, also senkrecht zu den Magazinführungsbahnen verschiebbarer Schieber ausgebildet. Er könnte aber ebensogut als Hebel ausgebildet sein, dessen einer Arm beispielsweise in den Hohlraum des Gehäuseteiles 6 gedrängt wird und dessen anderer Arm dann nach oben gegen den Reiter 8 geschwenkt wird. Auch wäre es möglich, dass anstelle eines Anschlages 10d am Abtaster 10 der zweite Durchbruch 6a so gross und derart angeordnet ist, dass der Reiter 8 zwar in seiner gekuppelten Stellung durchgeschoben werden kann, in seiner entkuppelten Stellung dagegen gegen die Innenwand des Gehäuseteiles 6 nahe dem Durchbruch 6a stösst. In diesem Falle dürfte allerdings der Innenraum des Gehäuseteiles 6 nicht länger als der Reiter 8 sein, um eine automatische Einkupplung zu gewährleisten. Auch wäre es möglich, zusätzlich zum Anschlag 10d auch den gemäss Ausführungsbeispiel durch den Durchbruch 6c gebildeten Anschlag am Abtaster vorzusehen. Schliesslich könnte die Anordnung auch so getroffen sein, dass die Feder 9 in Entkupplungsrichtung wirksam ist und der Abtaster 10 in die Führungsbahn 1 für die Magazine 2 mit grösserer Diafachbreite ragt und beim Einsetzen eines derartigen Magazins 2 den Reiter 8 federnd an den Transportarm 7 ankuppelt.

**Patentansprüche**

1. Diaprojektor für gerahmte Diapositive, die in Magazinen unterschiedlicher Typen angeordnet sind, wobei sich die verschiedenen Magazintypen durch eine unterschiedliche Diafachbreite unterscheiden, wobei ein motorisch oder von Hand betätigbarer Diawechselschieber und eine Vorrichtung zum schrittweisen Weitertransport des jeweils eingesetzten Magazins um jeweils eine Diafachbreite nach der Zurückführung eines projizierten Dias in das Magazin vorgesehen sind, wobei die Breite des Diawechselschiebers in seinem Teilabschnitt, der beim Diatransport zwischen die in einem Magazin befindlichen Dias ein- und ausfahren und dabei jeweils das mittlere von drei Dias mitnehmen muss, kleiner ist als der Abstand zwischen einem Dia und dem übernächsten in dem Magazin mit der geringeren Diafachbreite angeordneten Dia, und wobei ein in Transportrichtung des Diawechselschiebers verschiebbarer Reiter in diesen Teilabschnitt an die Stirnseite des Diawechselschiebers bewegbar ist, dessen Breite grösser als die Stirnbreite des Wechselschiebers und kleiner als der Abstand zwischen einem Dia und dem übernächsten Dia in dem Magazin mit der grösseren Diafachbreite ist, dadurch gekennzeichnet, dass der Reiter (8) etwa senkrecht zur Verschieberichtung des Wechselschiebers (7) und vorzugsweise senkrecht zu den Ebenen von zwei unterschiedlichen, parallelen Magazinführungsbahnen (1; 3) für die beiden unterschiedlichen Magazin-Typen (2; 4) an der magazinseitigen Stirnseite (7a) des Wechselschiebers (7) mit diesem unter der Wirkung einer Feder (9) kuppelbar bzw. entkuppelbar und durch einen in die Magazinführungsbahn (3) für einen der Magazin-Typen (4) ragenden, beim Einschieben eines Magazins (4) in diese Führungsbahn (3) bewegten, mit dem Reiter (8) zusammenwirkenden Abtaster (10) entkuppelbar bzw. kuppelbar ist, und dass Anschläge (6c; 10d) am Gehäuse (6) und/oder am Abtaster (10) vorgesehen sind, die in der entkuppelten Stellung des Reiters (8) in dessen Verschiebeweg liegen.

2. Diaprojektor nach Anspruch 1, dadurch gekennzeichnet, dass der Abtaster (10) in die Magazinführungsbahn (3) für den Magazin-Typ (4) mit der geringeren Diafachbreite ragt, gegen deren Ebene federnd angeordnet ist und gegenüber der Magazintransportrichtung gegenläufig geneigte Schrägflächen (10a; 10b) aufweist, die beim Einschieben eines Magazins (4; 4a) in dieser Magazinführungsbahn (3) mit diesem zusammenwirken derart, dass der Abtaster entgegen der Federwirkung angehoben wird.

3. Diaprojektor nach Anspruch 1 oder 2, dadurch gekennzeichnet, dass der Reiter (8) etwa O-förmig den Wechselschieber (7) übergreift und eine Kupplungsklaue (8a) aufweist, die mit einer wechselschieberseitigen Kupplungsausnehmung (7b) in Eingriff bringbar und durch den Abtaster (10) aus der Kupplungsausnehmung (7b) aushebbar ist.

4. Diaprojektor nach einem der vorhergehenden Ansprüche, dadurch gekennzeichnet, dass der Abtaster (10) magazinseitig an seiner mit dem Reiter (8) zusammenwirkenden Fläche (10c) einen Vorsprung (10d) aufweist, der in der entkuppelten Stellung des Reiters (8) einen Anschlag für letzteren bildet.

5. Diaprojektor nach einem der vorhergehenden Ansprüche, dadurch gekennzeichnet, dass der Reiter (8) an seiner magazinseitigen Stirnseite (8b) eine Ausnehmung (8c) aufweist, in die in seiner gekuppelten Stellung ein stirnseitiger Anschlaglappen (7c) des Wechselschiebers (7) eingreift.

6. Diaprojektor nach einem der vorhergehenden Ansprüche, dadurch gekennzeichnet, dass der Wechselschieber (7) in einem auf der dem Projektorobjektiv abgewandten Magazinführungsbahnseite liegenden hohlen Gehäuseteil (6) geführt ist, das auf der der Führungsbahn (1; 3) abgewandten Seite einen Durchbruch (6b) aufweist, der kleiner als der Reiter (8) ist, und auf der der Führungsbahn (1; 3) zugewandten Seite einen Durchbruch (6a) von der Grösse und Lage hat, dass der Reiter (8) zumindest in seiner mit dem Wechselschieber (7) gekuppelten Lage hindurchbewegbar ist.

**Claims**

1. A slide projector for the projection of framed photographic slides which are arranged in magazines of relatively different types, the distinction in magazine type residing in the relatively different widths of the slide-holding compartments, comprising a motorised or manually driven slide-changer and means for intermittently transporting the respective inserted magazine by individual steps each corresponding to the width of one slide-holding magazine compartment after a projected slide has been returned to the magazine, the width of the slide-changer in that region thereof which during slide transport must be displaced into and out of the space between slides in a magazine and in each case carry along with it the middle one of three slides, being less than the distance between one slide and the next-but-one slide in the magazine with slide-holding compartments of inferior width, and a cursor which is slidable in the direction of transport of the slide-changer and which is movable in this region towards a frontal side of the slide-changer, the width of said cursor being greater than the frontal width of the slide-changer and less than the distance between one slide and the next-but-one slide in the magazine having slide-holding compartments of superior width, characterized in that the cursor (8) is adapted to be coupled to or uncoupled from the slide-changer (7) at the frontal side (7a) thereof adjacent to the magazine under the influence of a spring (9), such coupling or uncoupling being substantially perpendicularly to the direction of displacement of the slide-changer (7) and preferably perpendicularly to the planes of two different, mutually parallel magazine guide tracks (1; 3) for the two different magazine types (2; 4), and in that the said cursor (8) is adapted to be uncoupled or coupled by means of a scanner (10) coacting with the cursor (8), which scanner (10) projects into the guide track (3) for one magazine type (4) and is displaced into this track (3) when a corresponding magazine (4) is inserted into the same, and in that end-stops (6c; 10d) are provided on the housing (6) and/or on the scanner (10), which end stops extend into the path of sliding displacement of the cursor (8) when the latter is in its uncoupled position.

2. A slide projector according to claim 1, characterized in that the scanner (10) projects into the guide track (3) for the magazine type (4) having slide-holding compartments of inferior width, being spring-loaded relative to the plane of said track and provided with sloping faces (10a; 10b) which are oppositely inclined relative to the direction of magazine transport and which coact with a magazine (4; 4a) on insertion of the latter into said track (3) in such a way that the scanner (10) is lifted in opposition to its spring loading.

3. A slide projector according to claim 1 or 2, characterized in that the cursor (8) embraces the slide-changer (7) approximately O-fashionwise and comprises a clutch-dog (8a) which is adapted to engage in a recess (7b) on the side of the slide-changer and to be lifted out of said recess (7b) by the scanner (10).

4. A slide projector according to any preceding claim, characterized in that the scanner (10) is provided on that side thereof which is adjacent to the magazine with a shoulder (10d) formed on the scanner face (10c) which co-acts with the cursor (8) to provide an endstop for the latter in the uncoupled position thereof.

5. A slide projector according to any preceding claim, characterized by the provision of a recess (8c) in the magazine-facing frontal side (8b) of the cursor (8) in which engages a frontal stop-lug (7c) of the slide-changer (7) when the cursor (8) is in the operatively coupled position thereof.

6. A slide projector according to any preceding claim, characterized in that the slide-changer (7) is guided in a hollow housing part (6) situated on a side of the magazine track which is remote from the objective of the projector, said housing part (6) comprising an aperture (6b) on the side which is remote from the guide track (1; 3), which aperture (6b) is smaller than the cursor (8), whilst on the side facing the guide track (1; 3) the housing part (6) has an aperture (6a) of such size and position as to allow the cursor (8) to pass there through at least when coupled with the slide-changer (7).

**Revendications**

1. Projecteur de diapositives pour les diapositives montées dans des cadres disposées dans des magasins de types différents, les types de magasins différents se distinguant entre eux par des largeurs différentes des cases à diapositives, du genre dans lequel on prévoit un changeur de diapositive, commandé par un moteur ou manuellement et un dispositif pour le transport, pas-à-pas, du magasin mis en place, d'une largeur de case à diapositive, après le retour, dans le magasin d'une diapositive projetée, la largeur du changeur de diapositives, dans sa section partielle qui, lors du transport de diapositives, doit introduire et extraire les diapositives qui se trouvent dans un magasin et doit entraîner la diapositive intermédiaire parmi trois diapositives, étant inférieure à la distance entre diapositive et la diapositive située après la suivante dans le magasin à largeur de case à diapositive de largeur plus faible, et dans lequel un cavalier déplaçable dans la direction de transport du changeur de diapositives est susceptible d'être déplacé, dans cette section partielle, vers le côté frontal du changeur de diapositives, dont la largeur est plus grande que la largeur frontale du changeur de diapositives et inférieure à la distance entre une diapositive et la diapositive située après la suivante dans le magasin ayant la plus grande largeur de cases à diapositives, caractérisé par le fait que le cavalier (8) est susceptible d'être accouplé ou désaccouplé, sous l'action d'un ressort (9), à peu près perpendiculairement à la direction du déplacement du chargeur de diapositives (7), de préférence perpendiculairement aux plans de deux voies de guidage différentes et parallèles (1; 3) du magasin pour les deux types de magasins différents (2; 4), avec ou du changeur de vues (7), au niveau du côté frontal (7a) de ce dernier, qui est situé du côté du magasin et est susceptible d'être désaccouplé ou accouplé du ou avec un palpeur (10) coagissant avec le cavalier (8) et pénétrant dans la voie de guidage (3) du magasin pour l'un (4) des types de magasins et déplacé dans cette voie de guidage (3) lors de la mise en place d'un magasin, et que des butées (6c; 10d) sont prévues sur le carter (6) et/ou sur le palpeur (10), et se situent dans la trajectoire du cavalier (8) dans la position désaccouplée de ce dernier.

2. Projecteur pour diapositives selon la revendication 1, caractérisé par le fait que le palpeur (10) pénètre dans la voie de guidage (3) du magasin pour un magasin (4) ayant la moindre largeur de cases à diapositives, qu'il est disposé élastiquement contre le plan de cette voie de guidage et qu'il comporte des surfaces obliques (10a; 10b) inclinées en sens opposé à la direction de transport du magasin, lesquelles surfaces obliques coopèrent avec un magasin (4; 4a) introduit dans cette voie de guidage (3) du magasin de manière que le palpeur soit soulevé contre l'action d'un ressort.

3. Projecteur de diapositives selon la revendication 1 ou 2, caractérisé par le fait que le cavalier (8) chevauche, en forme de O, le changeur de vues (7), et comporte une griffe d'accouplement (8a) qui est susceptible de pénétrer dans une encoche d'accouplement (7b) située du côté du changeur de vues, et est susceptible d'être dégagée de l'encoche d'accouplement (7d) à l'aide du palpeur (10).

4. Projecteur de diapositives selon l'une des revendications précédentes, caractérisé par le fait que le palpeur (10) comporte, du côté du magasin, et au niveau de sa surface (10c) qui coagit avec le cavalier (8), une partie saillante (10d) qui forme, dans la position désaccouplée du cavalier (8), une butée pour ce dernier.

5. Projecteur de diapositives selon l'une des revendications précédentes, caractérisé par le fait que le cavalier (8) comporte au niveau de son côté frontal (8b) situé du côté du magasin, une encoche (8c) dans laquelle pénètre, dans la position accouplée du cavalier, une languette de butée frontale (c) du changeur de vues.

6. Projecteur de diapositives selon l'une des revendications précédentes, caractérisé par le fait que le changeur de vues (6) est guidé dans une partie de carter (6) creuse et située du côté de la voie de guidage du magasin qui est éloigné de l'objectif du projecteur, ledit élément de boîtier présentant, du côté qui est éloigné de la voie de guidage (1; 3), une ouverture (6b) qui est plus petite que le cavalier (8), alors qu'il possède, du côté qui est voisin de la voie de guidage (1; 3), une ouverture (6a) dont la dimension et la position sont telles que le cavalier (8) puisse y être déplacé au moins dans sa position accouplée avec le changeur de vues (7).

Fig. 2

Fig. 3

Fig. 1